# EUROPEAN PATENT APPLICATION

(11) **EP 4 844 611 A1**
(43) Date of publication of application: **25.11.2026**
(21) Application number: 26176439.3
(22) Date of filing: 05.05.2026
(51) Int. Cl.: G06F 21/55, G06F 21/56

(54) **DETECTING CRYPTOCURRENCY MINING USING CONTAINERIZED PROCESS TREE ANALYSIS**

(30) Priority: 19.05.2025 US 202519212122
(71) Applicant: Microsoft Technology Licensing, LLC, Redmond, WA 98052 (US)
(72) Inventor: SAKAZI, Shay Chriba, Redmond, Washington, 98052 (US); SALMAN, Tamer, Redmond, Washington, 98052 (US); BRUSKIN, Sunders, Redmond, Washington, 98052 (US)
(74) Representative: CMS Cameron McKenna Nabarro Olswang LLP

(57) **Abstract**

A tool for detecting crypto mining activity within a containerized computing environment in includes a container process tree retriever and a crypto mining process detector. The container process tree retriever obtains a container process tree indicating parent-child process relationships that exist within a container of the containerized computing environment. The crypto mining process detector generates a process sub-tree graph from the container process tree, assesses similarity between the process sub-tree graph and a preidentified crypto mining process tree pattern representing parent-child process relationships of a crypto mining scheme; and terminates processes identified in the process sub-tree graph in response to determining that the process sub-tree graph and the preidentified crypto mining process tree pattern satisfy similarity criteria.

## Description

### Background

Proof-of-work crypto mining is a consensus mechanism used to validate transactions performed using cryptocurrencies like Bitcoin, Litecoin, and Monero. When a cryptocurrency transaction takes place, validation of the transaction entails solving complex mathematical problems using computational power, usually provided by specialized hardware like GPUs (graphics processing units) or ASICs (application-specific integrated circuits). When a crypto transaction occurs, a record of the transaction is sent across a network and bundled into a block with other crypto transactions that are then made available for validation.

Crypto miners are entities that compete to validate blocks of crypto transactions for monetary reward. Validating a block of crypto transactions entails solving a cryptographic puzzle, e.g., a guessing game that involves hash functions. The first crypto miner to identify a solution for a block of crypto transactions broadcasts the solution to the network, where the validation is then "checked" by others. If correct, the transaction block is added to a blockchain and a monetary award is granted to the crypto miner who identified the solution.

Due to the monetary rewards available, crypto mining is a highly competitive space that often implicates malicious activity - commonly referred to as crypto-jacking or illicit mining, which involves unauthorized or unethical practices to gain mining rewards by exploiting systems, users, or networks. These activities harm victims (typically, tenants that pay for monthly subscriptions to cloud-based hardware resources) by draining their computing resources, increasing energy costs, and/or compromising security.

### Summary

According to one implementation, a method of detecting illicit crypto mining activity within a containerized computing environment includes: obtaining a container process tree indicating parent-child process relationships that exist within the containerized computing environment; generating a process sub-tree graph from the container process tree; assessing similarity between the process sub-tree graph and a preidentified crypto mining process tree pattern representing parent-child process relationships that exist within a multi-process crypto mining scheme; and triggering a security alert that notifies an authorized user of the containerized computing environment of a potential security breach in response to determining that the process sub-tree graph and the preidentified crypto mining process tree pattern satisfies similarity criteria.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### Brief Description of the Drawings

FIG. 1 illustrates an example computing system including a crypto mining process detector that uses containerized process trees to detect and disrupt illicit crypto mining activities.
FIG. 2 illustrates an example of a process tree graph that is usable to detect illicit crypto mining activity.
FIG. 3 illustrates further examples of process sub-tree graphs generated based on a container process tree.
FIG. 4 illustrates example operations executable to detect illicit crypto mining activity occurring within a containerized computing environment
FIG. 5 illustrates an example schematic of a processing device suitable for implementing aspects of the disclosed technology.

### Detailed Description

Illicit crypto mining activity, also referred to herein as "crypto-jacking," is difficult to detect because it often assumes the form of stealth-like background processes that consume small quantities of resources - typically, just enough resources to mine cryptocurrency without alerting the authorized user(s) or owner(s) of those illicitly-obtained resources. For example, some crypto miners deploy malware that is configured to self-limit CPU or GPU usage (e.g., to 10-30%) to hinder detection or to self-pause processes at times of higher legitimate account activity to prevent slowdowns of nominal processes that may raise suspicions. For this reason, authorized accounts owners often do not realize that they have been victims of crypto-jacking until they receive exorbitant energy bills stemming from the unauthorized resource usage.

State-of-the-art crypto mining malware detection tools tend to focus on text-based detection mechanisms associated with isolated processes. For example, these mechanisms search process names and command line data for keywords commonly implicated during crypto mining activity, such as by looking for crypto processes with recognized names, commands commonly used in crypto mining, or by looking for domain name service (DNS) calls to known crypto mining pool domains. While these mechanisms can be effective at catching the most straightforward threats, this approach often fails to detect more complex attacks that rely on the interplay between multiple processes - referred to herein as "multi-process crypto schemes."

Crypto miners can, for example, operate multiple processes with self-modifying payloads that evade detection by dispersing small tasks among large numbers of processes that individually live for short periods of time. For example, a more sophisticated (difficult-to-detect) multi-process crypto mining scheme is characterized by a high-level process that lives a few seconds in duration and that - during those few seconds - spawns many child processes that individually consume very few resources and may also be configured to self-terminate after a few seconds (e.g., after completing a small, isolated processing task). Within this evolving multi-process crypto mining scheme, higher level process(es) may frequently self-terminate and be re-instantiated many times over. For example, a high-level process may re-assign its process ID to a still-living child at each instance of self-termination or instead spawn children that are configured to frequently "check for" the parent process and re-create the parent process when it is no longer active.

Crypto mining detection tools that focus on isolated processes and text-based detection tactics are largely inadequate at detecting and disrupting the above-described types of more sophisticated crypto-jacking schemes that rely on coordinated efforts between many rapidly evolving processes. The herein-disclosed technology includes a detection tool that utilizes the unique shape of a container process tree to detect illicit crypto mining operations carried out by multiple coordinated processes (multi-process crypto mining schemes). When deployed as a detection mechanism within containerized, cloud-based resource environments, this detection tool is far more effective at disrupting illicit crypto mining activities than conventional detection solutions.

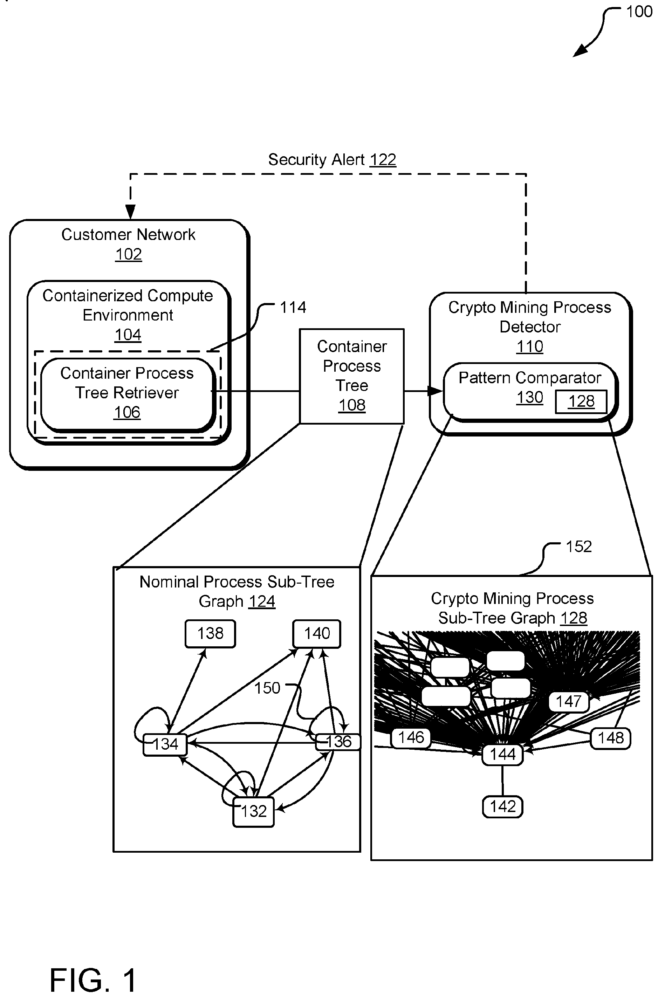

FIG. 1 illustrates an example computing system 100 that includes a crypto mining process detector 110 that uses containerized process trees to detect and disrupt illicit crypto mining (crypto-jacking) activities. The computing system 100 includes a customer network 102 including a containerized compute environment 104. The containerized compute environment 104 includes processing resources, such as virtual machines (VMs) or physical machines that work together to run applications inside containers that are jointly orchestrated or managed.

In one implementation, the computing system 100 is a cloud-based computing system, and the customer network 102 includes a compute cluster (or portion thereof) that is used by an individual tenant of the computing system. 100 For example, the cluster includes a control plane for managing the cluster and worker nodes (virtual machines (VMs) that run applications). In this implementation, the containerized compute environment 104 is a cloud-managed environment where containers are scheduled on the VMs. One example of a cloud-managed containerized compute environment 104 is Kubernetes, which provides containerized compute environments to customers assigned to node clusters in the Kubernetes network. For example, an online retail platform is a tenant of the Kubernetes network and runs microservices (e.g., cart, checkout, user) in separate containerized environments that individually serve different online customers.

In another implementation, the containerized compute environment 104 is a group of engines (e.g., hosts) deployed as a single virtual system. For example, the containerized compute environment is a group of nodes that uses built-in Docker tools to run containerized applications. Small development teams may, for example, run internal tools in containers across several VMs using a Docker Swarm Cluster.

The containerized compute environment 104 includes at least one container (e.g., container 114) that runs a container process tree retriever 106 in addition to other customer applications (not shown). The container process tree retriever 106 comprises software that periodically retrieves a container process tree 108 by querying an operating system kernel. The container process tree 108 is a visual or logical representation of all processes running inside of the container 114 as well as the hierarchical structure among those processes, including an identification of the parent process that started each active process as well as the sub-processes spawned by specific active processes. For example, the container process tree 108 identifies an initial container process (e.g., PID 1) and all child and descendant processes depending therefrom. The container process tree 108 is a common tool used in applications such as debugging, monitoring, and security auditing. An example rudimentary process tree may assume a form such as:

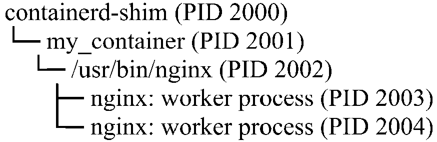

In the example shown above, the process tree includes a root process "my_container" with a process identifier (PID) of "2001." This root process (PID 2001) has a child process with PID "2002", which has spawned two child processes identified by PIDs 2003 and 2004. In this case, the process IDs 2003 and 2004 are said to be "grandchild processes" of the root process (PID 2001).

In some implementations, the container process tree 108 includes multiple subtrees. Each subtree includes its own root node- typically, a child process of the main (root) process of the container (e.g., a child of PID 2001 in the above example) and the collection of its hierarchical descendants. For example, a container process tree with multiple subtrees has a form such as:

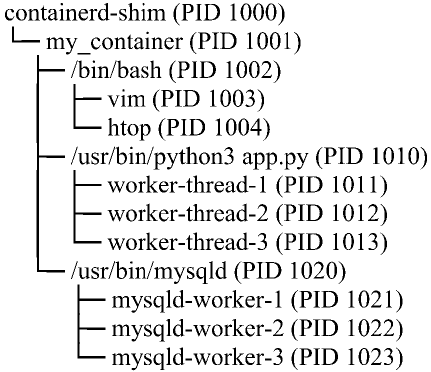

In this example, the container process tree 108 has a root process ("my_container," PID 1001), which is the main process of the container. This root process runs through child processes - namely, a shell session ("/bin/bash (PID 1002)"), a python application ("usr/bin/python3 app.py (PID 1010)"), and a database service ("/usr/bin/mysqld (PID 1020)"). The shell session PID 1002) runs two child processes, while the python application (PID 1010) and database service (PID 1020) each run three child ("worker") processes.

In implementations, the container process tree 108 is obtained by executing a command line call that returns a process list organized in a hierarchical manner. The exact commands utilized depend upon configuration aspects of the containerized compute environment 104, which may differ from one implementation to another.

The container process tree 108 is passed as input to a crypto mining process detector 110. Instead of using text-based search tools (e.g., keyword searching) to detect suspicious activity, the crypto mining process detector 110 uses shape and form characteristics of the container process tree 108 to determine whether the processes within the tree are likely conducting sub-tasks of a crypto mining scheme. The crypto mining process detector 110 compares the different subtrees within the container process tree 108 to a "preidentified crypto mining process tree pattern." As used herein, the term "preidentified crypto mining process tree pattern" refers to one or more characteristics that are likely to be observed in the container process tree 108 when resources of the containerized compute environment 104 are being used to conduct illicit crypto mining activities, such as attempting to validate crypto transactions while also self-modifying to mitigate the likelihood of being detected and/or to increase survival odds in lieu of common "kill" processes executed by competitors in the crypto mining space.

For example, FIG. 1 illustrates a crypto mining process sub-tree graph 128 that exemplifies aspects of the preidentified crypto mining process tree pattern - meaning, this graph has been generated based on and is, therefore, representative of a coordinated multi-process crypto mining scheme.

Once received at the crypto mining process detector 110, the container process tree 108 is parsed into individual sub-trees, which are, in turn, translated into graphical representations referred to herein as process sub-tree graphs. Process sub-tree graphs include nodes corresponding to different subsets of the processes within the container process tree 108 with parent-child relationships between those nodes represented as graph edges. Within this type of structure, a first process is said to be the "parent" of a second process (e.g., a "child" process) when the first process has spawned (instantiated) the child process.

When parsing the container process tree 108 into individual sub-tree structures (that are, in turn, translated into graphs), sub-trees are created for children instantiated by the root process of the container 114. Stated differently, the resulting process sub-tree graphs are each characterized by a root process referred to below as the *"sub-tree root process"* to distinguish from the root process of the container 114. The sub-tree root process on each different process sub-tree graph is a direct child of the root process within the larger container 114 (e.g., a child of the root node on the container process tree 108). If, for example, the container process tree 108 has a root process with three children, each of which have their own children, then a separate process sub-tree graph is created for each of the three children and their respective process descendants. Per this methodology, each of those three children (directly instantiated by the root process of the container 114) becomes a "sub-tree root process" on a different subtree that also includes its respective descendent processes.

By example, FIG. 1 illustrates a nominal process sub-tree graph 124 that corresponds to a nominal process sub-tree extracted from the container process tree 108. In this sense, "nominal" implies that the represented processes are not performing crypto mining tasks or are otherwise executing malware designed to highjack account resources in support of crypto mining activities. In this example, the nominal process sub-tree graph 124 includes a root process 132, which has spawned two child processes, 134 and 136, respectively. The child process 134 has also spawned its own child ("grandchild process 138" - referencing the fact that this is a "grandchild" of the root process 132) while the child process 136 has spawned one more child, shown as grandchild process 140. This graph has five nodes (representing the five different processes) and edges that identify parent-child relationships between nodes. The total number of edges shown in the nominal process sub-tree graph is 13.

In the particular type of process sub-tree graph that is shown in FIG. 1, different instances of the same process are collapsed into a single node that identifies the name of the process (meaning, one node can represent different PIDs for processes of the same name). For example, the nominal process sub-tree graph 124 includes a process 140, which has edges connecting it to three different parent nodes 132, 134, and 136, respectively. This indicates that different instances of the process 140 have been instantiated by the parent node 132, the parent node 134, and the parent node 136. These three instances of the process 140 were co-executing at the time that the container process tree 108 was created.

Within the nominal process sub-tree graph 124, some process nodes have edges that appear as loops - referred to herein as "self-loops" (e.g., a self-loop 150)- that begin and end at the same process node. A self-loop indicates that a process has spawned a new instance of itself or re-executed itself. This can be indicative of some nominal activity. For example, some applications are designed to restart themselves on failure or configuration change. As discussed in further detail below, high numbers of these self-loops are often seen in process tree graphs representing crypto mining malware as a consequence of the fact that the malware sub-processes are often designed to self-terminate and re-instantiate in various ways as a detection evasion tactic.

After parsing the container process tree 108 into subtrees and creating process sub-tree graphs for the subtrees, the sub-tree graphs are passed as input to a pattern comparator 130. The pattern comparator 130 assesses the similarity between the preidentified crypto mining process tree pattern and the individual process sub-tree graphs generated from the container process tree 108. While performing this comparison, the pattern comparator 130 may reference either a logical or a graphical definition of the preidentified crypto mining process tree pattern. The crypto mining process sub-tree graph 128 is intended to illustrate one of many different process sub-tree graphs, including the preidentified crypto mining process tree pattern. The preidentified crypto mining process tree pattern is likewise detectable within different instances of the crypto mining process sub-tree graph 128 corresponding to different multi-process crypto mining schemes.

The crypto mining process tree pattern is defined by one or more characteristics that, when present in a particular process sub-tree graph generated for the container 114, indicate that the container 114 is executing a multi-process crypto mining scheme with a predefined degree of certainty.

Although different crypto processing schemes give rise to process sub-tree graphs with different characteristics, there exist multiple such characteristics (collectively referred to as the predefined crypto mining pattern) that are often detectable within process sub-tree graphs corresponding to multi-process crypto mining schemes.

The illustrated portion of the crypto mining process sub-tree graph 128 includes a sub-tree root process 142, a single child process 144 descending from the sub-tree root process 142, and a number of grandchild of the root processes that depend from the child process 144 (e.g., grandchild processes 146, 147 148). In the interest of clarity, more distant descendants (e.g., great-grandchildren and beyond) of the sub-tree root process 142 are omitted from the image frame 152. However, the portion of the crypto mining process sub-tree graph 128 shown illustrates one of the more distinguishing characteristics of the crypto mining process tree pattern, which is the existence of a much larger number of nodes and edges than that observed in process sub-tree graphs corresponding to nominal customer application activity (e.g., the nominal process sub-tree graph 124).

As compared to the nominal process sub-tree graph 124 (with five nodes and thirteen edges), the crypto mining process sub-tree graph 128 includes 421 nodes and 1363 edges. This vast number of nodes and edges arise as a product of a crypto mining scheme design - namely, the objective to draw upon as many resources as possible while also distributing the workload into very small tasks that are individually unlikely to impart system latencies detectable by the end-user or otherwise trigger detections by automated security mechanisms (e.g., mechanisms that shut down individually processes responsible that exceed a threshold CPU or GPU utilization. Although the total numbers of process sub-tree graph edges and nodes vary across different crypto mining schemes, the number of process nodes observed in these schemes is commonly at least 5 times greater than the average number of nodes observed in relation to process sub-tree graphs representing nominal application activity. This number of nodes is typically distributed with many nodes at the same hierarchical level (e.g., there are tens or hundreds of grandchildren at one level), which gives the tree a wider-than-average shape. Consequently, the width of a process sub-tree graph corresponding to crypto mining activity is typically eight times greater than that observed in graphs representing nominal application activity. Likewise, the number of edges observed in multi-process crypto mining schemes is commonly at least 10 times greater than the average number of nodes observed in relation to nominal application activity. These numerical characteristics are based on recent data, but could change depending on evolving patterns of behavior related to cryptomining.

Another characteristic of the above-referenced crypto mining process tree pattern that is also visible in the crypto mining process sub-tree graph 128 is the existence of a sub-tree root process 142 (e.g., crypto mining malware) that spawns a child process (e.g., child process 144) with an unusually large number of grandchildren as compared to other children of the sub-tree root process 142 and/or children descending from other processes on the container process tree 108 (e.g., root children in other sub-trees extracted from the container process tree 108).

In a nominal process sub-tree graph, the sub-tree root process is likely to have a few children (e.g., 1-5 children) that each have a few children of their own (e.g., 1-5 children). In contrast to this, process sub-tree graphs containing the crypto mining process tree pattern commonly include a sub-tree root process with at least one child that has an unusually large number of its own children as compared to other children of the sub-tree root and also in comparison to the number of first-generation children (e.g., children of the sub-tree root process) in other sub-tree graphs constructed for the container 114.

This is exemplified in the crypto mining process sub-tree graph 128, in which the sub-tree root process 142 has exclusively one child with a very large number of grandchildren (e.g., more than 100 grandchildren). Notably, the number of grandchildren descendent from a sub-tree's root process (grandchildren of the sub-tree root process 142) may vary across different crypto mining schemes; however, process sub-tree graphs corresponding to multi-process crypto mining schemes routinely include a sub-tree root process with one direct child that, in turn, has a significantly greater number of children than other nodes in the tree (e.g., the sub-tree root has a large number of grandchildren).

The above-described "single-child with many-grandchild" architecture is the result of malware design objectives that seek to evade detection and enhance resilience to forced termination. In this design, a single child of the sub-tree root process 142 acts as a task coordination agent by instantiating tens or hundreds of children to perform different crypto-related tasks ("worker agents") while also re-instantiating any of such children that are terminated prematurely. In this design scheme, the sub-tree root process 142 refrains from delegating tasks or instantiating its own crypto mining "workers," thereby increasing the likelihood of surviving a termination event that kills the task coordination agent (e.g., the child process 144) prematurely. If, for example, the child process 144 is terminated by a crypto detection tool or by a kill command of a crypto mining competitor, this design increases the likelihood that the sub-tree root process 142 will still live on. In this case, the sub-tree root process 142 can re-instantiate the child process 144, which can, in turn, re-instantiate the worker agents.

The pattern comparator 130 compares the different sub-tree process graphs generated for the container process tree 108 to the predefined crypto mining process tree pattern (e.g., as exemplified by the crypto mining process sub-tree graph 128) and assesses similarity criteria to determine whether the different sub-tree process graphs include instances of the predefined crypto mining process tree pattern. The exact set of similarity criteria used in this detection scheme may be different from one implementation to another. For example, detection of the predefined crypto process mining tree pattern within a select process sub-tree graph may depend on a first detection criterion that is satisfied when the number of nodes within a select process sub-tree graph exceeds a first predefined threshold (e.g., more than 45 nodes), a second detection criterion that is satisfied when the number of edges within a select process sub-tree graph exceeds a second predefined threshold (e.g., more than 300 edges) and/or a third detection criterion that is satisfied when the select process sub-tree graph has a sub-tree root process with one child that, in turn, has a number of its own children (grandchildren of the sub-tree root process) exceeding a third threshold (e.g., more than 15). Alternatively, another detection criterion may be satisfied based on the "width" of the process tree (e.g., the number of children at any single hierarchical level) exceeding a predefined threshold, such as when there exist greater than 15 children depending from a single node.

In still other implementations, detection of the predefined crypto mining process tree pattern depends upon positive detection of one or more other sub-tree characteristics in addition to one or more of the above-described criteria. Although not necessarily definitive in itself, suspected crypto mining activity may - in some cases - be confirmed by checking that the height (number of hierarchical levels) in the process sub-tree is within a predefined range (e.g., a range typical of multi-process crypto mining schemes), by confirming that the sub-tree graph includes greater than a threshold number of "self-loops" (e.g., edges that start and end at the same node, signifying the node re-instantiating itself by self-terminating and assigning its process ID to a child), and/or by detecting process names that are known to be common in crypto mining schemes (e.g., these schemes often execute a "pKill" process that attempts to kill processes of other crypto mining competitors).

In different implementations, the pattern comparator 130 assesses the similarity criteria in different ways. In one implementation, the pattern comparator 130 employs a rule-based approach that "checks" for the existence of one or more characteristics of the above-described predefined crypto mining process tree pattern. For example, assessing the similarity criteria entails verifying that there exists greater than a threshold number of nodes and/or edges and/or verifying the existence of a root process with one child process having a number of its own children (grandchildren of the sub-tree root process) that exceeds another threshold.

In another implementation, the pattern comparator 130 utilizes a trained model to compare embeddings that encode different process sub-tree graphs. For example, the pattern comparator 130 generates a first embedding encoding hierarchical relationships of the preidentified crypto mining process tree pattern (e.g., as shown in the crypto mining process sub-tree graph 120) and also generates second embeddings that individually encode hierarchical relationships of different process sub-trees graphs generated for the container process tree 108. The pattern generator then measures a similarity metric based on the embeddings, such as by computing a dot product or cosine similarity between the first embedding and various of the second embeddings. The similarity criteria are, for example, satisfied when the value of this similarity metric has a value in a predefined range (e.g., exceeding a predefined threshold such as 0.9 or 0.85 when the similarity metric is a cosine similarity value).

Upon positive detection of one or more characteristics of the preidentified crypto mining process tree pattern within a select one of the process sub-tree graphs generated for the container process tree 108, the crypto mining process detector 110 selectively executes a remedial action, such as by transmitting a security alert 122 to notify the account owner of the customer network 102 of the potential illicit crypto mining activity. Alternatively, in some implementations, the crypto mining process detector 110 responds to positive detection of the preidentified crypto mining process tree pattern by terminating all processes included within the process sub-tree that includes the preidentified crypto mining process tree pattern - e.g., either automatically or after prompting a rightful user/owner of the customer network 102 for authorization to enact terminate the collection of processes. This multi-process termination capability improves upon existing detection tools because it guarantees termination of the "root" process leading the crypto mining scheme. In contrast, existing detection tools tend to terminate isolated processes that are identified as suspicious, which often allows fragments of the crypto mining malware to survive and re-spawn the isolated terminated processes.

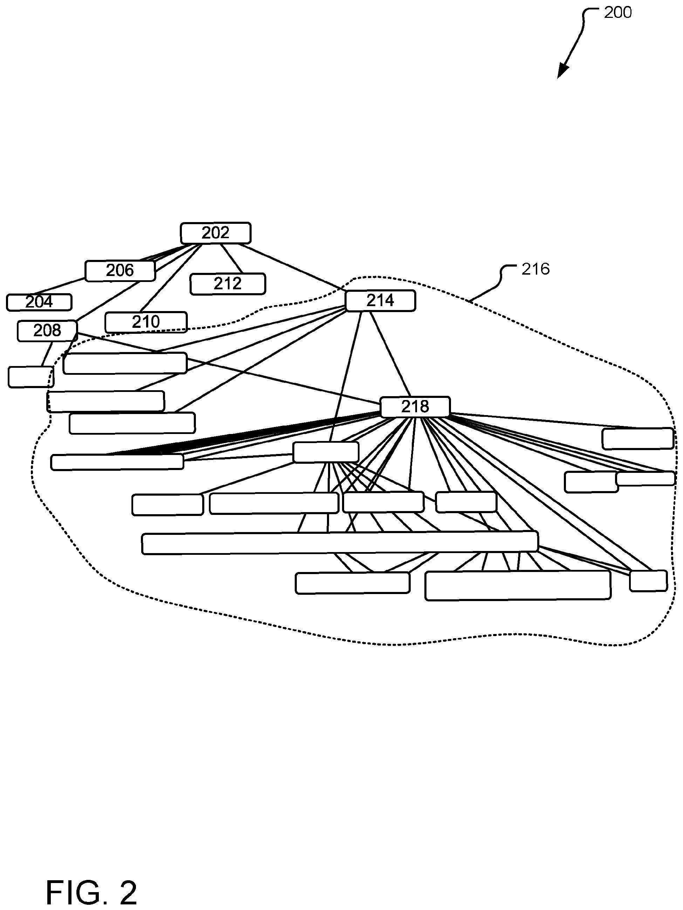

FIG. 2 illustrates an example of a process tree graph 200 that is usable to detect illicit crypto mining activity. The process tree graph 200 is generated for a container and includes a root process 202 that has six children 204, 206, 208, 210, 212, and 214. When the herein-disclosed detection tool is used to process a container process tree with this architectural structure, different process sub-tree graphs may be generated for some or all of the six children of the root process 202. As a result of this process, a process sub-tree graph 216 is created (e.g., including the nodes and edges illustrated as internal to the dotted line boundary).

When analyzing the different process sub-tree graphs generated for this container, the herein-described crypto mining process detector determines that the process sub-tree graph 216 includes multiple characteristics of a predefined crypto mining process tree pattern including, for example (1) a total number of nodes in excess of a threshold; (2) a total number of edges in excess of a second threshold; (3) a width that exceeds a defined size (e.g., the number of grandchildren of the sub-tree root process exceeds a third threshold); and (4) the sub-tree root process 214 includes one child (process node 216) that has a disproportionately larger number of children as compared to other nodes the process tree graph 200 and other nominal container process trees. Based on the satisfaction of some or all of these criteria, the crypto mining process detector triggers a security alert that notifies an authorized owner of the container of a potential security breach that has resulted in the unauthorized use of container resources. The crypto mining process detector additionally prompts the owner for authorization to terminate the sub-tree root process 214 and all processes descendent of the sub-tree root process 214. In response to receiving such authorization, the crypto mining process detector terminates all processes of the multi-process crypto mining scheme.

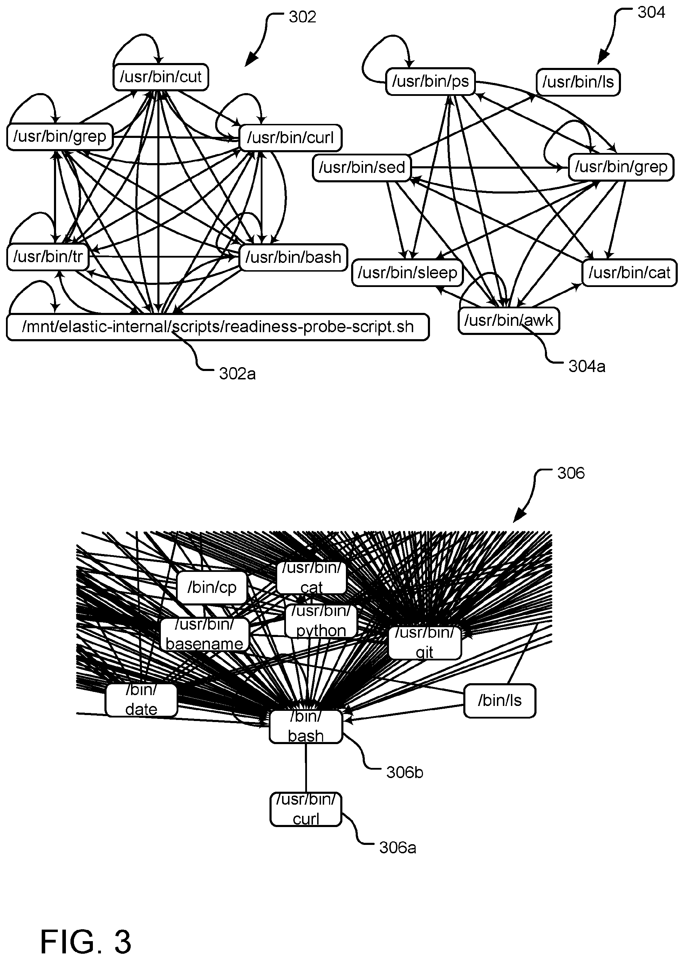

FIG. 3 illustrates further examples of process sub-tree graphs 302, 304, and 306 generated based on a container process tree (e.g., with a structure and contents as generally described with respect to FIG. 1). The process sub-tree graphs 302, 304, and 306 may be generated from the same or different container process trees. For example, the process graphs 302 and 304 correspond to sub-trees of the same container process tree (e.g., processes executing within the same container) or instead represent processes executing within different containers.

The process sub-tree graphs 302 and 304 are indicative of nominal runtime conditions within a customer container, while the process sub-tree graph 306 is indicative of crypto mining malware executing within the customer container. The process sub-tree graph 302 includes six total nodes and 36 edges, including a root node 302a that has spawned multiple children. Similarly, the process sub-tree graph 304 includes seven nodes and 21 total edges, including a root node 304a that has spawned multiple children. In contrast to this, the process sub-tree graph 306 includes 421 total nodes and 1363 total edges. Unlike the process sub-tree graphs 302 and 304, the process sub-tree graph 306 includes a sub-tree root process 306a that has a single child process 306b. The child process 306b has hundreds of its own children. Thus, in this case, the sub-tree root process 306a has more than 100x the number of grandchildren that are observed with respect to sub-tree root processes in other process sub-graph trees representative of nominal customer container activity. Stated differently, the number of second generation descendants of the sub-tree root process 206a (grandchildren processes of 306a) represents an extreme outlier within a distribution of points identifying the number of second generation descendants of the sub-tree root process within a statistically significant number of process sub-tree graphs corresponding to nominal customer application activity.

As described with respect to FIG. 1, implementations of the disclosed technology detect crypto mining activity by comparing characteristics of process sub-tree graphs (generated from a container process tree) to a set of characteristics collectively referred to herein as a preidentified crypto mining process tree pattern. Thus, the disclosed methodology provides for measuring the similarity between the process sub-tree graphs generated from a customer compute environment and the preidentified crypto mining process tree pattern. This may be achieved using a rule-based approach, embedding generation and comparison, or any other suitable comparison methodology for comparing process graphs or individual characteristics of process graphs. When a select process tree subgraph and the preidentified crypto mining process tree pattern are determined to satisfy predefined similarity criteria (based on one or more of the above-described characteristics in isolation or in combination with one another), a security alert is triggered to notify the container owner (authorized user) of potential illicit processes that are suspected as being crypto mining malware. In addition, some implementations provide for automatic termination of all processes on a select process sub-tree that is determined to satisfy the similarity criteria.

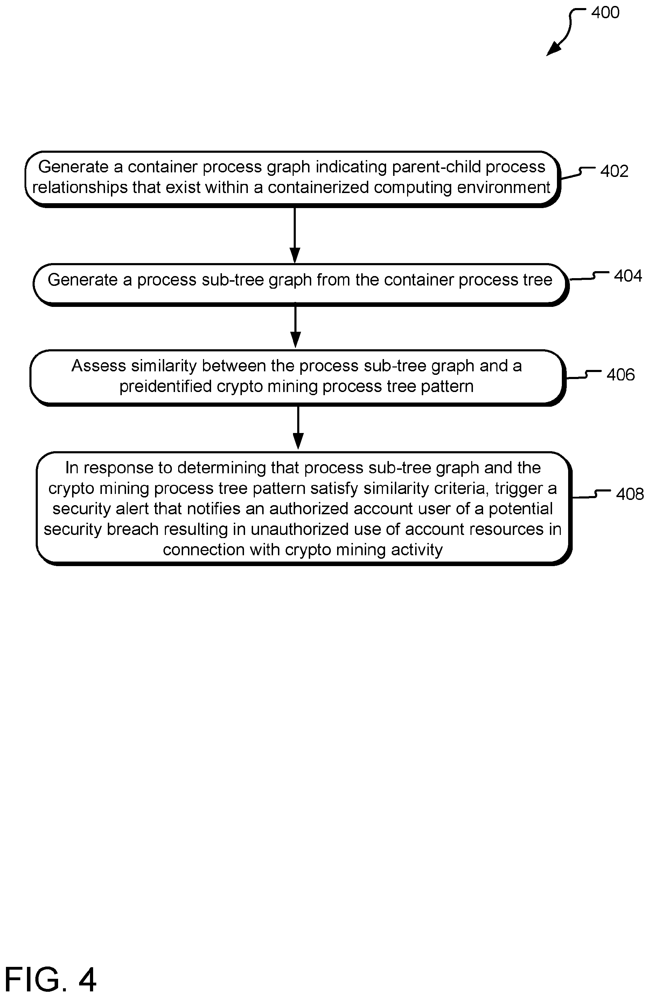

FIG. 4 illustrates example operations 400 executable to detect illicit crypto mining activity occurring within a containerized computing environment. The example operations include a container process tree generation operation 402 that generates a container process tree indicating parent-child process relationships that exist within the containerized computing environment. A process sub-tree graph generation operation 404 generates a process sub-tree graph from the container process tree. The process sub-tree graph identifies a subset of the parent-child process relationships appearing within the container process tree. In one implementation, the process sub-tree graph includes nodes corresponding to active processes within a container of the containerized compute environment and edges that identify parent-child relationships between individual pairs of the processes.

A similarity assessment operation 406 assesses the similarity between the process sub-tree graph and a preidentified crypto mining process tree pattern indicating parent-child process relationships of a crypto mining scheme. In one implementation, the preidentified crypto mining process tree pattern has a root process (e.g., referred to elsewhere herein as a sub-tree root process), a child process instantiated by the root process, and at least a threshold number of grandchild processes instantiated by from the child process. In implementations, the similarity assessment operation 406 may entail assessing the satisfaction of predefined similarity criteria.

In one implementation, satisfaction of the similarity criteria depends upon the satisfaction of a first detection criterion. The first detection criterion is satisfied when the process sub-tree graph includes a single root process with exclusively one child process and a number of grandchild processes that exceeds the first threshold.

In another implementation, the satisfaction of the similarity criteria depends upon satisfaction of a second detection criterion. The second detection criterion is satisfied when the process sub-tree graph has a total number of nodes exceeding a second threshold. For example, the second threshold is five times the average number of nodes observed in nominal process sub-tree graphs.

In another implementation, the satisfaction of the similarity criteria depends upon the satisfaction of a third detection criterion. The third detection criterion is satisfied when the process sub-tree graph has a total number of edges exceeding a third threshold. For example, the third threshold is ten times the average number of edges observed in nominal process sub-tree graphs.

In other implementations, satisfaction of the similarity criteria depends upon satisfaction of some combination of the above-described first detection criterion, second detection criterion, third detection criterion, and fourth detection criterion.

Returning to operations 400, a security alert notification operation 408 triggers a security alert in response to the process sub-tree graph and the preidentified crypto mining process tree pattern satisfying the similarity criteria. The security account notification notifies an authorized account user of a potential security breach that has resulted in potential unauthorized use of account resources in connection with crypto mining activity.

In some implementations, the operations 400 further include terminating the processes represented within the process sub-tree graph in response to satisfaction of the similarity criteria. For example, these processes may be automatically terminated or the authorized account user may be prompted with a request to authorize termination of the processes that, upon receipt, effects termination of the processes.

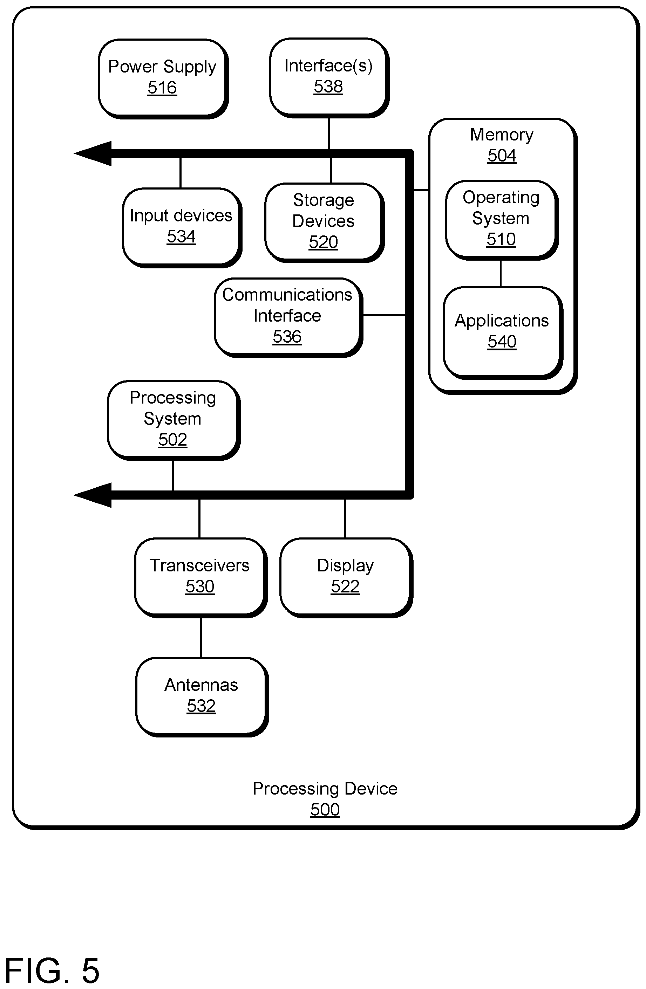

FIG. 5 illustrates an example schematic of a processing device 400 suitable for implementing aspects of the disclosed technology. The processing device 500 includes a processing system 502, memory 504, a display 506, and other interfaces 508 (e.g., buttons). The processing system 502 may include one or more CPUs, GPUs, etc. The processing device 500 may be a client computing device (such as a laptop computer, a desktop computer, or a tablet computer), a server/cloud computing device, an Internet-of-Things (IoT), any other type of computing device, or a combination of these options.

The memory 504 generally includes both volatile memory (e.g., RAM) and nonvolatile memory (e.g., flash memory), although one or the other type of memory may be omitted. An operating system 510 resides in the memory 504 and is executed by the processing system 502. In some implementations, the processing device 500 includes and/or is communicatively coupled to storage 520.

In the example processing device 500, one or more software modules, segments, and/or processors, such as applications 550 (e.g., the container process tree retriever 106 and crypto mining process detector of FIG. 1) are loaded into the operating system 510 on the memory 504 and/or the storage 520 and executed by the processing system 502. The storage 520 may state machine data that includes agent definitions, state definitions, permissible state transitions, developer-defined events, and structured variable definitions.

The processing device 500 may include one or more communication transceivers 530, which may be connected to one or more antenna(s) 432 to provide network connectivity (e.g., mobile phone network, Wi-Fi^{®}, Bluetooth^{®}) to one or more other servers, client devices, IoT devices, and other computing and communications devices. The processing device 400 may further include a communications interface 536 (such as a network adapter or an I/O port, which are types of communication devices) that is used to establish connections over a wide-area network (WAN) or local-area network (LAN). It should be appreciated that the network connections shown are exemplary and that other communications devices and means for establishing a communications link between the processing device 500 and other devices may be used.

The processing device 500 may include one or more input devices 534 such that a user may enter commands and information (e.g., a keyboard, trackpad, or mouse). These and other input devices may be coupled to the server by one or more interfaces 538, such as a serial port interface, parallel port, or universal serial bus (USB). The processing device 500 may further include a display 522, such as a touchscreen display.

The processing device 500 may include a variety of tangible processor-readable storage media and intangible processor-readable communication signals. Tangible processor-readable storage can be embodied by any available media that can be accessed by the processing device 500 and can include both volatile and nonvolatile storage media and removable and non-removable storage media. Tangible processor-readable storage media excludes intangible, transitory communications signals (such as signals per se) and includes volatile and nonvolatile, removable, and non-removable storage media implemented in any method, process, or technology for storage of information such as processor-readable instructions, data structures, program modules, or other data. Tangible processor-readable storage media includes but is not limited to RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the processing device 400. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

In some aspects, the techniques described herein relate to a method of detecting illicit crypto mining activity within a containerized computing environment, the method including: obtaining a container process tree indicating parent-child process relationships that exist within the containerized computing environment; generating a process sub-tree graph from the container process tree, the process sub-tree graph identifying a subset of the parent-child process relationships indicated within the container process tree; assessing similarity between the process sub-tree graph and a preidentified crypto mining process tree pattern representing parent-child process relationships that exist within a multi-process crypto mining scheme, the preidentified crypto mining process tree pattern identifying a root process, a child process instantiated by the root process, and at least a threshold number of grandchild processes instantiated by the child process; and in response to determining that the process sub-tree graph and the preidentified crypto mining process tree pattern satisfies similarity criteria, triggering a security alert that notifies an authorized user of the containerized computing environment of a potential security breach.

In some aspects, the techniques described herein relate to a method, wherein the process sub-tree graph includes nodes corresponding to active processes and edges corresponding to relationships between the active processes.

In some aspects, the techniques described herein relate to a method, wherein assessing similarity between the process sub-tree graph and the preidentified crypto mining process tree pattern includes: generating a first embedding encoding the parent-child process relationships represented within preidentified crypto mining process tree pattern; generating a second embedding encoding the subset of the parent-child relationships identified within the process sub-tree graph; measuring a similarity metric by computing a dot product or cosine similarity between the first embedding and the second embedding; and triggering the security alert when the similarity metric is in a predefined value range.

In some aspects, the techniques described herein relate to a method, wherein triggering the security alert includes prompting the authorized user for authorization to terminate a set of processes identified within the process sub-tree graph.

In some aspects, the techniques described herein relate to a method, wherein satisfaction of the similarity criteria depends upon a first detection criterion satisfied when the process sub-tree graph includes a single root process with exclusively one child process and at least the threshold number of grandchild processes.

In some aspects, the techniques described herein relate to a method, wherein satisfaction of the similarity criteria depends on satisfaction of least one of: a second detection criterion satisfied when the process sub-tree graph has a total number of nodes exceeding a second threshold; and a third detection criterion satisfied when the process sub-tree graph has a total number of edges exceeding a third threshold.

In some aspects, the techniques described herein relate to a method, further including: terminating all processes identified within the process sub-tree graph in response to satisfaction of the similarity criteria.

In some aspects, the techniques described herein relate to a system for detecting illicit crypto mining activity within a containerized computing environment, the system including: memory; and a container process tree retriever stored in the memory and configured to generate a container process tree indicating parent-child process relationships that exist within a container of the containerized computing environment; a crypto mining process detector stored in the memory and configured to: obtain a process sub-tree graph from the container process tree, the process sub-tree graph identifying a subset of the parent-child process relationships indicated within the container process tree; assess similarity between the process sub-tree graph and a preidentified crypto mining process tree pattern representing parent-child process relationships of a crypto mining scheme, the preidentified crypto mining process tree pattern identifying a root process, a child process instantiated by the root process, and at least a threshold number of grandchild processes instantiated by the child process; and in response to determining that the process sub-tree graph and the preidentified crypto mining process tree pattern satisfy similarity criteria, terminate processes identified in the process sub-tree graph.

In some aspects, the techniques described herein relate to a system, wherein the process sub-tree graph includes nodes corresponding to active processes and edges corresponding to relationships between the active processes.

In some aspects, the techniques described herein relate to a system, wherein the crypto mining process detector assesses the similarity between the process sub-tree graph and the preidentified crypto mining process tree pattern by executing operations that include: obtaining a first embedding encoding the parent-child process relationships of the preidentified crypto mining process tree pattern; generating a second embedding corresponding to the process sub-tree graph, the second embedding encoding the parent-child process relationships of the crypto mining scheme; measuring a similarity metric by computing a dot product or cosine similarity between the first embedding and the second embedding, wherein the similarity criteria are satisfied when a value of the similarity metric is within a predefined value range.

In some aspects, the techniques described herein relate to a system, wherein the crypto mining process detector is further configured to transmit a security alert notification to an authorized user of the containerized compute environment in response to satisfaction of the similarity criteria.

In some aspects, the techniques described herein relate to a system, wherein the crypto mining process detector is further configured to: prompt the authorized user for authorization to terminate the processes identified within the process sub-tree graph; and terminate the process in response to receiving the authorization.

In some aspects, the techniques described herein relate to a system, wherein satisfaction of the similarity criteria depends upon a first detection criterion satisfied when the process sub-tree graph includes a single root process, exclusively one child process depending from the root process, and at least the threshold number of grandchild processes depending from the exclusively one child process.

In some aspects, the techniques described herein relate to a system, wherein satisfaction of the similarity criteria depends on satisfaction of least one of: a second detection criterion satisfied when the process sub-tree graph has a total number of nodes exceeding a second threshold; and a third detection criterion satisfied when the process sub-tree graph has a total number of edges exceeding a third threshold.

In some aspects, the techniques described herein relate to one or more tangible computer-readable storage media encoding processor-executable operations for executing a computer process for detecting illicit crypto mining activity within a containerized computing environment, the computer process including: obtaining a container process tree identifying parent-child process relationships that exist within the containerized computing environment; generating a process sub-tree graph corresponding to a sub-tree of the container process tree, the process sub-tree graph including nodes corresponding to a subset of processes identified within the container process tree and edges identifying parent-child process relationships that exist among the subset of processes; defining a crypto mining process tree pattern based on a process sub-tree graph representing relationships between processes that execute as part of a coordinated crypto mining scheme, the crypto mining process tree pattern being characterized by a total number of processes that exceeds a first threshold; assessing satisfaction of similarity criteria by comparing the process sub-tree graph to the crypto mining process tree pattern; in response to determining that the process sub-tree graph and the crypto mining process tree pattern satisfy the similarity criteria, triggering a security alert that notifies an authorized user of the containerized computing environment of a potential security breach.

In some aspects, the techniques described herein relate to one or more tangible computer-readable storage media, wherein satisfaction of the similarity criteria depends upon a first detection criterion satisfied when the process sub-tree graph has a total number of processes that exceeds the first threshold.

In some aspects, the techniques described herein relate to one or more tangible computer-readable storage media, wherein satisfaction of the similarity criteria depends on satisfaction of a second detection criterion satisfied when the process sub-tree graph includes a single root process with exclusively one child process and a number of grandchild processes that exceeds a second threshold.

In some aspects, the techniques described herein relate to one or more tangible computer-readable storage media, wherein satisfaction of the similarity criteria depends on satisfaction of a third detection criterion satisfied when the process sub-tree graph has a total number of edges exceeding a third threshold.

In some aspects, the techniques described herein relate to one or more tangible computer-readable storage media, wherein the similarity criteria is assessed by computing a similarity metric through operations that include: generating a first embedding encoding the parent-child process relationships of the crypto mining process tree pattern; generating a second embedding encoding the parent-child process relationships of the process sub-tree graph; and measuring a similarity metric by computing a dot product or cosine similarity between the first embedding and the second embedding, wherein the similarity criteria is satisfied when the similarity metric is within a predefined range of values.

In some aspects, the techniques described herein relate to one or more tangible computer-readable storage media, wherein the computer process further includes terminating the processes identified within the process sub-tree graph in response to satisfaction of the similarity criteria.

Herein a tool for detecting crypto mining activity within a containerized computing environment in includes a container process tree retriever and a crypto mining process detector. The container process tree retriever obtains a container process tree indicating parent-child process relationships that exist within a container of the containerized computing environment. The crypto mining process detector generates a process sub-tree graph from the container process tree, assesses similarity between the process sub-tree graph and a preidentified crypto mining process tree pattern representing parent-child process relationships of a crypto mining scheme; and terminates processes identified in the process sub-tree graph in response to determining that the process sub-tree graph and the preidentified crypto mining process tree pattern satisfy similarity criteria.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language. The above specification, examples, and data, together with the attached appendices, provide a complete description of the structure and use of example implementations.

## Claims

1. A method of detecting illicit crypto mining activity within a containerized computing environment, the method comprising:
obtaining a container (114) process (140) tree (108) indicating parent-child process (140, 144, 136, 134) relationships that exist within the containerized computing environment;
generating a process (140) sub-tree graph (306, 216) from the container (114) process (140) tree (108), the process (140) sub-tree graph (306, 216) identifying a subset of the parent-child process (140, 144, 136, 134) relationships indicated within the container (114) process (140) tree (108);
assessing similarity between the process (140) sub-tree graph (306, 216) and a preidentified crypto mining process (140) tree pattern representing parent-child process (140, 144, 136, 134) relationships that exist within a multi-process (140) crypto mining scheme, the preidentified crypto mining process (140) tree pattern identifying a root process (140, 202, 132), a child process (140, 144, 136, 134) instantiated by the root process (140, 202, 132), and at least a threshold number of grandchild processes (147, 146) instantiated by the child process (140, 144, 136, 134); and
in response to determining that the process (140) sub-tree graph (306, 216) and the preidentified crypto mining process (140) tree pattern satisfies similarity criteria, triggering a security alert (122) that notifies an authorized user of the containerized computing environment of a potential security breach.

2. The method of claim 1, wherein the process sub-tree graph includes nodes corresponding to active processes and edges corresponding to relationships between the active processes.

3. The method of claim 1 or 2, wherein assessing similarity between the process sub-tree graph and the preidentified crypto mining process tree pattern includes:
generating a first embedding encoding the parent-child process relationships represented within preidentified crypto mining process tree pattern;
generating a second embedding encoding the subset of the parent-child relationships identified within the process sub-tree graph;
measuring a similarity metric by computing a dot product or cosine similarity between the first embedding and the second embedding; and
triggering the security alert when the similarity metric is in a predefined value range.

4. The method of any preceding claim, wherein triggering the security alert includes prompting the authorized user for authorization to terminate a set of processes identified within the process sub-tree graph.

5. The method of any preceding claim, wherein satisfaction of the similarity criteria depends upon a first detection criterion satisfied when the process sub-tree graph includes a single root process with exclusively one child process and at least the threshold number of grandchild processes.

6. The method of any preceding claim, wherein satisfaction of the similarity criteria depends on satisfaction of least one of:
a second detection criterion satisfied when the process sub-tree graph has a total number of nodes exceeding a second threshold; and
a third detection criterion satisfied when the process sub-tree graph has a total number of edges exceeding a third threshold.

7. The method of any preceding claim, further comprising:
terminating all processes identified within the process sub-tree graph in response to satisfaction of the similarity criteria.

8. A system for detecting illicit crypto mining activity within a containerized computing environment, the system comprising:
memory (504); and
a container (114) process (140) tree (108) retriever (106) stored in the memory (504) and configured to generate a container (114) process (140) tree (108) indicating parent-child process (140, 144, 136, 134) relationships that exist within a container (114) of the containerized computing environment;
a crypto mining process (140) detector (110) stored in the memory (504) and configured to:
obtain a process (140) sub-tree graph (306, 216) from the container (114) process (140) tree (108), the process (140) sub-tree graph (306, 216) identifying a subset of the parent-child process (140, 144, 136, 134) relationships indicated within the container (114) process (140) tree (108);
assess similarity between the process (140) sub-tree graph (306, 216) and a preidentified crypto mining process (140) tree pattern representing parent-child process (140, 144, 136, 134) relationships of a crypto mining scheme, the preidentified crypto mining process (140) tree pattern identifying a root process (140, 202, 132), a child process (140, 144, 136, 134) instantiated by the root process (140, 202, 132), and at least a threshold number of grandchild processes (147, 146) instantiated by the child process (140, 144, 136, 134); and
in response to determining that the process (140) sub-tree graph (306, 216) and the preidentified crypto mining process (140) tree pattern satisfy similarity criteria, terminate processes identified in the process (140) sub-tree graph (306, 216).

9. The system of claim 8, wherein the process sub-tree graph includes nodes corresponding to active processes and edges corresponding to relationships between the active processes.

10. One or more tangible computer-readable storage (520) media encoding processor-executable operations (400) for executing a computer process (140) for detecting illicit crypto mining activity within a containerized computing environment, the computer process (140) comprising:
obtaining a container (114) process (140) tree (108) identifying parent-child process (140, 144, 136, 134) relationships that exist within the containerized computing environment;
generating a process (140) sub-tree graph (306, 216) corresponding to a sub-tree of the container (114) process (140) tree (108), the process (140) sub-tree graph (306, 216) including nodes corresponding to a subset of processes identified within the container (114) process (140) tree (108) and edges identifying parent-child process (140, 144, 136, 134) relationships that exist among the subset of processes;
defining a crypto mining process (140) tree pattern based on a process (140) sub-tree graph (306, 216) representing relationships between processes that execute as part of a coordinated crypto mining scheme, the crypto mining process (140) tree pattern being **characterized by** a total number of processes that exceeds a first threshold;
assessing satisfaction of similarity criteria by comparing the process (140) sub-tree graph (306, 216) to the crypto mining process (140) tree pattern;
in response to determining that the process (140) sub-tree graph (306, 216) and the crypto mining process (140) tree pattern satisfy the similarity criteria, triggering a security alert (122) that notifies an authorized user of the containerized computing environment of a potential security breach.

11. The one or more tangible computer-readable storage media of claim 10,
wherein satisfaction of the similarity criteria depends upon a first detection criterion satisfied when the process sub-tree graph has a total number of processes that exceeds the first threshold.

12. The one or more tangible computer-readable storage media of claim 11, wherein satisfaction of the similarity criteria depends on satisfaction of a second detection criterion satisfied when the process sub-tree graph includes a single root process with exclusively one child process and a number of grandchild processes that exceeds a second threshold.

13. The one or more tangible computer-readable storage media of claim 12, wherein satisfaction of the similarity criteria depends on satisfaction of a third detection criterion satisfied when the process sub-tree graph has a total number of edges exceeding a third threshold.

14. The one or more tangible computer-readable storage media of any preceding claim, wherein the similarity criteria is assessed by computing a similarity metric through operations that include:
generating a first embedding encoding the parent-child process relationships of the crypto mining process tree pattern;
generating a second embedding encoding the parent-child process relationships of the process sub-tree graph; and
measuring a similarity metric by computing a dot product or cosine similarity between the first embedding and the second embedding, wherein the similarity criteria is satisfied when the similarity metric is within a predefined range of values.

15. The one or more tangible computer-readable storage media of any claim 11 to 13, wherein the computer process further includes terminating the processes identified within the process sub-tree graph in response to satisfaction of the similarity criteria.
